# EUROPÄISCHE PATENTSCHRIFT

(11) **EP 0 523 054 B1**
(45) Veröffentlichungstag und Bekanntmachung des Hinweises auf die Patenterteilung: **28.06.1995**
(21) Anmeldenummer: 91903347.2
(22) Anmeldetag: 05.02.1991
(51) Int. Cl.: F16D 65/22, F16C 1/16

(54) **BREMSSEILBEFESTIGUNG FÜR EINE FESTSTELLBREMSE, INSBESONDERE FÜR EINE DUO-SERVO-TOPFHANDBREMSE**
BRAKE CABLE FIXING FOR A PARKING BRAKE, ESPECIALLY FOR A DUO-SERVO CHAMBER HAND-BRAKE
FIXATION DU CABLE DE FREINS D'ARRET, NOTAMMENT FREINS MANUELS EN DUO ASSISTES EN POT

(30) Priorität: 31.03.1990 DE 4010460; 08.12.1990 DE 4039274
(43) Veröffentlichungstag der Anmeldung: 20.01.1993
(73) Patentinhaber: ALFRED TEVES GmbH, 60441 Frankfurt (DE)
(72) Erfinder: PANEK, Claus-Peter, D-6374 Steinbach (DE); MUSOLF, Jürgen, D-6000 Frankfurt am Main 1 (DE); WOHLMANN, Uwe, D-8767 Wörth/Main (DE); POST, Wulf, D-6102 Pfungstadt (DE)
(86) Internationale Anmeldenummer: EP9100215
(87) Internationale Veröffentlichungsnummer: WO9115685

(56) Entgegenhaltungen:
- EP-A- 0 184 092
- DE-B- 1 253 966

## Beschreibung

Die Erfindung betrifft eine Bremsseilbefestigung für eine Feststellbremse, insbesondere für eine Duo-Servo-Topfhandbremse, gemäß dem Oberbegriff des Patentanspruchs 1.

Bekannt sind Duo-Servo-Feststellbremsen, die mechanisch über einen Seilzug betätigt werden beispielsweise aus dem Bremsenhandbuch, 9. Auflage 1985; Bartsch Verlag; Seite 135. Diese Bremse wird in Fahrzeugen verwendet, die an allen Rädern mit Scheibenbremsen ausgerüstet sind. Sie ist im Scheibentopf der Hinterradscheibenbremse untergebracht, wobei die Bremsbacken durch ein Spreizschloß an die Bremstrommel gepreßt werden. Wie auch aus der DE-B-1 253 966 bekannt ist, setzt sich das Spreizschloß aus einer Drucklasche und einem Betätigungshebel zusammen, die sich beide an einem Gelenkbolzen abstützen. Dabei wird das Bremsseil durch eine Öse im Betätigungshebel verstiftet. Neben der Unfallgefahr, die von dem heraushängenden Seil ausgeht, gestaltet sich der Montagevorgang des Einhängens des Bremsseiles sehr ungünstig und aufwendig, da das Seil durch den Achsschenkel über die Schutzbuchse in das Spreizschloß eingefädelt werden muß, zumal wenn in dieser Montagestufe die Bremstrommel bereits befestigt ist.

Die Erfindung geht daher aus von einer Bremse der sich aus dem Oberbegriff des Anspruchs 1 ergebenden Gattung.

Aufgabe der vorliegenden Erfindung ist es, eine Bremsseilbefestigung zu schaffen, bei der ein einfaches unkompliziertes Einhängen des Bremsseiles unfallfrei ohne Zuhilfenahme von Werkzeugen in das Spreizschloß einer am Fahrzeug befestigten Bremstrommel gewährleistet ist.

Diese Aufgabe wird bei der gattungsgemäßen Bremse durch die sich aus dem kennzeichnenden Teil des Anspruches 1 ergebende Merkmalskombination gelöst. Durch die Erfindung ist gewährleistet, daß das Bremsseil erst nach der Montage der Bremse, allein durch die von Hand erzeugte Vorschubbewegung des Bremsseiles in Richtung des trichterförmigen Kanales sich selbsttätig in den Gabelsitz des Betätigungshebels einhängt. Dabei ist vorgesehen, daß das Sicherungselement als Feder ausgebildet ist und an den Enden der Gabel des Betätigungshebels anliegt. Von Vorteil hierbei ist, daß der Seilendnippel des Bremsseiles nach Überwindung der Federkraft des Sicherungselementes und mit Hilfe ihrer Rückstellkraft ein selbsttätiges Einhängen bewirkt.

Weiterbildungen der Erfindung gemäß Anspruch 2 oder Anspruch 3 geben vor, daß das Sicherungselement formschlüssig in der Gabel der Drucklasche einsteckbar angeordnet und als offene Spange ausgebildet ist.

Von vorteilhafter Ausgestaltung der Erfindung ist die Merkmalskombination gemäß Anspruch 4, gemäß der der Seilendnippel des Bremsseiles als Einführhilfe vorzugsweise kegelförmig verjüngt ausgebildet ist und dem trichterförmigen Kanal angepaßt ist, damit der Seilendnippel beim Einhängen nicht an Kanten hängen bleibt.

Die weiterbildenden Merkmale nach Anspruch 5 unterstützen die Möglichkeit, das Seilende automatisch in die Gabel des Betätigungshebels einzuführen. Dabei muß das Seil so steif und das Federungselement so elastisch sein, daß der in den Trichter eingeführte Nippel das Sicherungselement am Trichterboden federnd wegzubiegen vermag, so daß der Nippel unter die Gabel geschoben wird und das zurückfedernde Spreizelement das darüberliegende schmalere Teil in die Gabel drückt.

In einer bevorzugten Ausführungsform nach Anspruch 6 besteht das Sicherungselement aus einer Blattfeder in Form einer offenen Spange mit zwei zur Anlage an die Drucklasche und den Betätigungshebel bestimmten Schenkeln. Diese Form ist besonders einfach und zweckmäßig. Zur Lagesicherung des Sicherungselements kann der an der Drucklasche anliegende Schenkel gemäß Anspruch 7 nach außen abgewinkelt sein.

Die Erfindung wird noch verbessert, wenn dieser Schenkel gemäß den Ansprüchen 8 bis 10 an der Drucklasche eingerastet ist. Durch diese Maßnahme wird ein unbeabsichtigtes Herausfallen des Sicherungselements, beispielsweise beim Einhängen des Bremsseils wirkungsvoll verhindert.

Mit Anspruch 11 wird eine Ausgestaltung des zweiten, am Betätigungshebel anliegenden Schenkels offenbart, die ein Verhaken des Schenkels mit dem Endnippel des Bremsseils verhindert.

Die Erfindung wird nach folgend anhand der Zeichnung näher erläutert.

Es zeigen
- Fig. 1: eine Vorderansicht eines Spreizschlosses einer Duo-Servo-Feststellbremse mit eingestecktem Sicherungselement und einzuführendem Bremsseil, einschließlich der angedeuteten Endstellung des Seilendnippels im Gabelsitz des Betätigungshebels,
- Fig. 2: in vergrößerter Darstellung einen Schnitt gemäß Fig. 1 längs der Linie A-A in Pfeilrichtung (von unten nach oben) betrachtet,
- Fig. 3: eine weitere Ausführung von einem erfindungsgemäßen Sicherungselement,
- Fig. 4: ein Ausführungsbeispiel mit verliersicher eingerastetem Sicherungselement und
- Fig. 5: ein weiteres Ausführungsbeispiel mit eingerastetem Sicherungselement.

Das Spreizschloß der Duo-Servo-Feststellbremse besteht aus einer Drucklasche 1 und einem Betätigungshebel 2, die sich beide an einem Gelenkbolzen 3 abstützen. Dabei stehen die Drucklasche 1 und der Betätigungshebel 2 über formschlüssig anliegende Distanzhebel 4 mit Bremsbacken 5 in Verbindung.

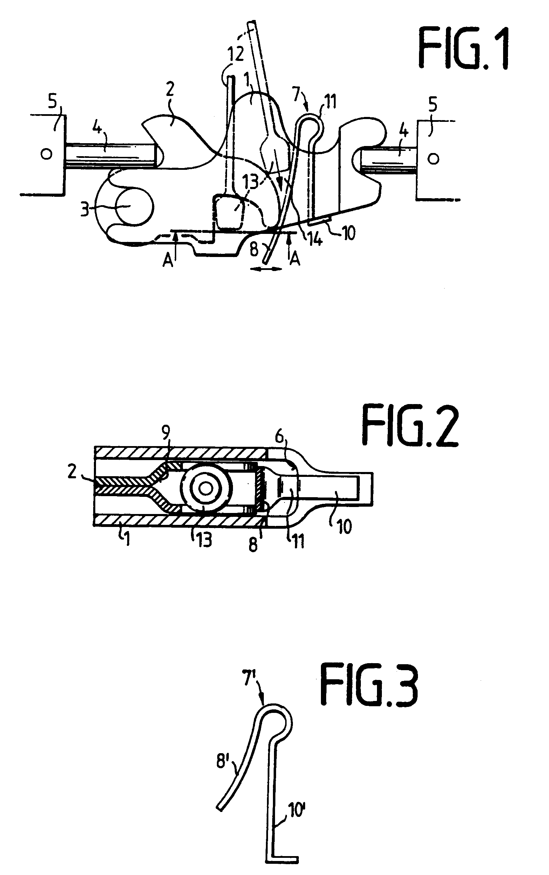

Wie aus Fig. 2 ersichtlich, ist die Drucklasche 1 und der Betätigungshebel 2 jeweils aus miteinander zusammenwirkenden Winkelhebeln gabelförmig ausgebildet, wobei der Betätigungshebel 2 innerhalb der Gabel 6 der Drucklasche 1 angeordnet ist. Im Scheitelpunkt der Gabel 6 ist ein Sicherungselement 7 angeordnet. Das Sicherungselement 7 ist in Form einer offenen Spange ausgebildet, wobei der eine federnde Schenkel 8 mit den Außenkanten der Gabel 9 des Betätigungshebels 2 in Verbindung steht. Der dem federnden Schenkel 8 gegenüberliegende Schenkel 10 ist abgewinkelt und greift zusammen mit dem abgewinkelten Scheitelpunkt 11 des Sicherungselementes formschlüssig über die Wandung der Gabel 6 der Drucklasche 1. Damit ein in die Gabel 9 des Betätigungshebels 2 einzuhängendes Bremsseil 12 mit einem Seilendnippel 13 nicht an den Kanten hängen bleibt, ist der Seilendnippel kegelförmig verjüngt ausgebildet. Beim Einhängen des Bremsseiles 12 bewegt sich der Seilendnippel 13 in einem von der Drucklasche 1 und dem Betätigungshebel 2 vorgesehenen Zwischenraum 14. Der Zwischenraum 14 bildet dabei durch die Außenkanten der Gabel 9 des Betätigungshebels 2 und den Schenkel 8 des Sicherungselementes 7 einen trichterförmigen Kanal. Der an den Außenkanten der Gabel 9 des Betätigungshebels 2 anliegende federnde Schenkel 8 wird beim Einfädeln durch den kegelförmig verjüngten Seilendnippel 13 des Bremsseiles 12 weggedrückt. Hat der Seilendnipel 13 die Außenkanten der Gabel 9 des Betätigungshebels 2 passiert, so wird der Seilendnippel 13 durch die Rückstellkraft des Schenkels 8 des Sicherungselementes 7 in Richtung der Gabel 9 des Betätigungshebels 2 gedrückt. Am Ende dieses Einbängevorganges befindet sich das Bremsseil 12 damit zwischen der Gabel 9 des Betätigungshebels 2.

Bei der ersten Zugbelastung des Bremsseiles 12 wird der Seilendnippel 13 endgültig in die vorgegebene Funktionslage der Gabel 9 gebracht.

Eine weitere Ausführung eines erfindungsgemäßen Sicherungselementes 7′ ist in Fig. 3 dargestellt.

Das Sicherungselement 7′ mit seinen Schenkeln 8′ und 10′ hat den Vorteil, daß ein kleinerer Einbauraum benötigt wird, wobei jedoch eine größere Kraft für die Überwindung des federnden Schenkels 8′ bei der Bremsseilmontage notwendig ist. Dabei kann der Schenkel 8′ so schmal ausgeführt sein, daß er zwischen die beiden Finger der Gabel ragt. Dabei muß allerdings sichergestellt sein, daß der Schenkel 10′ hinreichend fest am Scheitel der Drucklasche 1 verankert ist.

Das Aushängen des am Bremsseil 12 befindlichen Seilendnippels 13 erfolgt bei eingebauter Bremse ebenfalls auf einfache Weise, indem nach dem Abschrauben eines Hinterrades durch eine in der Bremstrommel angeordnete Bohrung der federnde Schenkel 8 bzw. 8′ beiseite gedrückt wird und der Seilendnippel 13 aus der Gabel 9 des Betätigungshebels 2 gerückt werden kann.

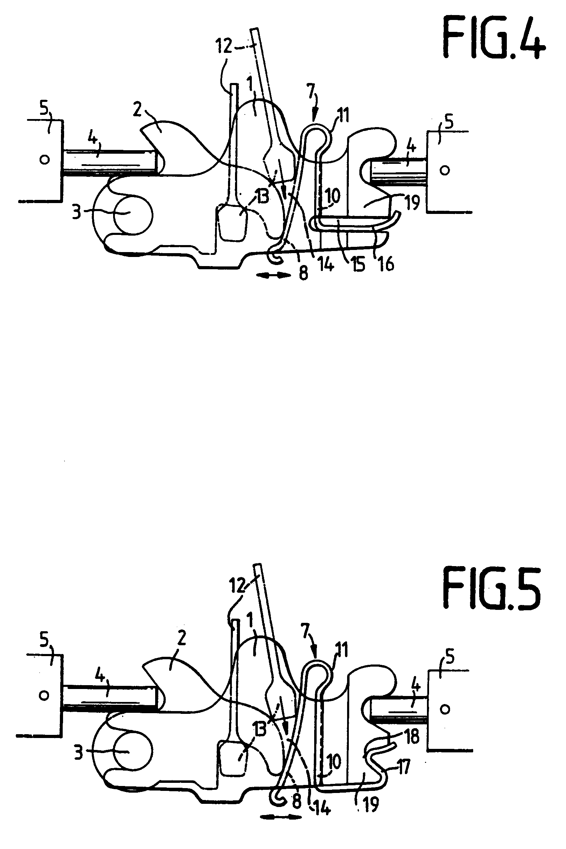

Bei dem in Fig. 4 dargestellten Ausführungsbeispiel weist die Drucklasche 1 in ihrem zum Andruck an den Distanzhebel 4 der Bremsbacke 5 bestimmten Endabschnitt 19 einen Durchbruch 15 auf, der vom Innenraum der Gabel 6 der Drucklasche 1 nach außen verläuft. Der Schenkel 10 des Sicherungselements 7 liegt mit einem ersten Abschnitt an der Innenwand der Gabel 6 federnd an und erstreckt sich mit einem abgewinkelten zweiten Abschnitt in den Durchbruch 15 hinein. Das freie Ende 16 des Schenkels 10 ist nochmals abgewinkelt und rastet an einer äußeren Kante des Durchbruchs 15 ein.

Eine weitere Möglichkeit, den Schenkel 10 am Spreizschloß einzurasten, zeigt Fig. 5. Der Endabschnitt 19 der Drucklasche 1 ist hier auf seiner Außenseite mit einer Ausnehmung 18 versehen. Der Schenkel 10 greift mit seinem zweiten Abschnitt von innen nach außen um den Endabschnitt 19 herum und rastet mit seinem S-förmigen freien Ende 17 in die Ausnehmung 18 ein.

## Patentansprüche

1. Bremsseilbefestigung für eine Feststellbremse, insbesondere für eine Duo-Servo-Topfhandbremse, mit einem aus einer gabelförmigen Drucklasche (1) und einem mit einer Gabel (9) versehenen Betätigungshebel (2) bestehenden Spreizschloß für Bremsbacken (5), wobei der Betätigungshebel (2) von der Gabel (6) der Drucklasche (1) umschlossen ist und wobei in der Gabel (9) des Betätigungshebels (2) ein Bremsseil (12) befestigbar ist, dadurch **gekennzeichnet**, daß in einem zwischen der Gabel (9) des Betätigungshebels (2) und dem Scheitelpunkt der Gabel (6) der Drucklasche (1) angeordneten und zum Hindurchführen eines Seilendnippels (13) des Bremsseils (12) vorgesehenen Zwischenraum (14) ein Sicherungselement (7, 7′) angeordnet ist, das sich an der Drucklasche (1) abstützt und einen federnden Schenkel (8, 8′) aufweist, der schräg durch den Zwischenraum (14) verlaufend an der Gabel (9) des Betätigungshebels (2) anliegt, so daß der Seilendnippel (13) zwischen dem Betätigungshebel (2) und dem federnden Schenkel (8, 8′) des Sicherungselements (7,7′) hindurchführbar und im Betätigungshebel (2) einhängbar ist.

2. Bremsseilbefestigung nach Anspruch 1, dadurch **gekennzeichnet,** daß das Sicherungselement (7,7′) formschlüssig in die Gabel (6) der Drucklasche (1) einsteckbar angeordnet ist.

3. Bremsseilbefestigung nach Anspruch 1 oder 2, dadurch **gekennzeichnet,** daß das Sicherungselement (7,7′) als offene Spange ausgebildet ist.

4. Bremsseilbefestigung nach einem der Ansprüche 1 bis 3, dadurch **gekennzeichnet,** daß der Seilendnippel (13) des Bremsseiles (12) als Einführhilfe vorzugsweise kegelförmig verjüngt ausgebildet ist.

5. Bremsseilbefestigung nach einem der Ansprüche 1 bis 4, dadurch **gekennzeichnet,** daß die Seitenwände des Zwischenraums in Verbindung mit dem Sicherungselement in Hindurchführrichtung des Seilendnippels (13) für diesen einen sich verjüngenden Trichter bilden, der das Seilende selbsttätig in die Gabelbefestigung führt.

6. Bremsseilbefestigung nach einem der Ansprüche 1 bis 5, dadurch **gekennzeichnet**, daß das vorzugsweise aus einer Blattfeder bestehende Sicherungselement (7,7′) in Form einer federnden, offenen Spange ausgebildet ist, die zwei von einem Scheitelpunkt (11) ausgehende Schenkel (8,8′,10,10′) zur federnden Anlage an die Drucklasche (1) und den Betätigungshebel (2) aufweist.

7. Bremsseilbefestigung nach Anspruch 6, dadurch **gekennzeichnet,** daß ein erster Schenkel (10,10′) an der Innenwand der Gabel (6) der Drucklasche (1) anliegt und an seinem freien Ende sowie im Bereich des Scheitelpunkts (11) nach außen abgewinkelt ist.

8. Bremsseilbefestigung nach Anspruch 6 oder 7, dadurch **gekennzeichnet,** daß der erste Schenkel (10,10′) an der Drucklasche (1) eingerastet ist.

9. Bremsseilbefestigung nach einem der Ansprüche 6 bis 8, dadurch **gekennzeichnet**, daß in dem zum Andruck einer Bremsbacke (5) bestimmten Endabschnitt (19) der Drucklasche (1) ein im wesentlichen senkrecht zum Bremsseil (12) verlaufender und vom Innenraum der Gabel (6) der Drucklasche (1) nach außen reichender Durchbruch (15) vorgesehen ist und daß sich der erste Schenkel (10) des Sicherungselements (7) mit seinem freien Ende (16) in den Durchbruch (15) erstreckt und dort einrastet.

10. Bremsseilbefestigung nach einem der Ansprüche 6 bis 8, dadurch **gekennzeichnet,** daß auf der Außenseite des zum Andruck einer Bremsbacke (5) bestimmten Endabschnitts (19) der Drucklasche (1) eine Ausnehmung (18) vorgesehen ist, daß der erste Schenkel (10) des Sicherungselements (7) den Endabschnitt (19) umgreift und mit seinem vorzugsweise S-förmigen freien Ende (17) in der Ausnehmung (18) einrastet.

11. Bremsseilbefestigung nach einem der Ansprüche 6 bis 10, dadurch **gekennzeichnet,** daß das freie Ende eines zweiten, an der Gabel (9) des Betätigungshebels (2) anliegenden Schenkels (8) des Sicherungselements (7) schlaufenförmig umgebogen ist.

## Claims

1. A brake cable fixing device for a parking brake, in particular for a duo-servo hat-section type parking brake, including an expanding lock for brake shoes (5) composed of a fork-shaped pressure bracket (1) and an actuating lever (2) having a fork (9), the actuating lever (2) being embraced by the fork (6) of the pressure bracket (1), and a brake cable (12) being fixable in the fork (9) of the actuating lever (2),
**characterized** in that a securing element (7, 7′) is positioned in a slot (14) provided between the fork (9) of the actuating lever (2) and the vertex of the fork (6) of the pressure bracket (1) to pass through it a cable end nipple (13) of the brake cable (12), the said securing element being supported at the pressure bracket (1) and having a spring leg (8, 8′) which extends transversely through the slot (14) and abuts against the fork (9) of the actuating lever (2) so that the cable end nipple (13) is adapted to pass between the actuating lever (2) and the spring leg (8, 8′) of the securing element (7, 7′) and is inserted in the actuating lever (2).

2. A brake cable fixing device as claimed in claim 1,
**characterized** in that the securing element (7, 7′) is arranged so as to be pluggable in a positive lock into the fork (6) of the pressure bracket (1).

3. A brake cable fixing device as claimed in claim 1 or in claim 2,
**characterized** in that the securing element (7, 7′) is provided as an open clasp.

4. A brake cable fixing device as claimed in any one of the claims 1 to 3,
**characterized** in that the cable end nipple (13) of the brake cable (12) preferably has a conically tapering shape to assist insertion.

5. A brake cable fixing device as claimed in any one of the claims 1 to 4,
**characterized** in that, in the direction of passing-through of the cable end nipple (13), the lateral walls of the slot along with the securing element form a tapering funnel for the cable end nipple which leads the cable end automatically into the forked fixing device.

6. A brake cable fixing device as claimed in any one of the claims 1 to 5,
**characterized** in that the securing element (7, 7′) which, preferably, is composed of a leaf spring has the shape of a resilient open clasp which includes two legs (8, 8′, 10, 10′) starting from a vertex (11) for resilient abutment against the pressure bracket (1) and the actuating lever (2).

7. A brake cable fixing device as claimed in claim 6,
**characterized** in that a first leg (10, 10′) abuts on the inside wall of the fork (6) of the pressure bracket (1) and is angled off outwardly at its free end and proximate the vertex (11).

8. A brake cable fixing device as claimed in claim 6 or in claim 7,
**characterized** in that the first leg (10, 10′) snaps in at the pressure bracket (1).

9. A brake cable fixing device as claimed in any one of the claims 6 to 8,
**characterized** in that in the end portion (19) of the pressure bracket (1), which is intended to apply a brake shoe (5), an aperture (15) is provided which extends substantially vertically to the brake cable (12) and extends from the inside of the fork (6) of the pressure bracket (1) outwardly, and in that the first leg (10) of the securing element (7) extends with its free end (16) into aperture (15) in a snap in fit.

10. A brake cable fixing device as claimed in any one of the claims 6 to 8,
**characterized** in that a recess (18) is provided on the outside of the end portion (19) of the pressure bracket (1), intended to apply a brake shoe (5), in that the first leg (10) of the securing element (7) embraces the end portion (19) and, with its preferably S-shaped free end (17), engages the recess (18) in a snap in fit.

11. A brake cable fixing device as claimed in any one of the claims 6 to 10,
**characterized** in that the free end of a second leg (8) of the securing element (7), which leg abuts on the fork (9) of the actuating lever (2), is bent to be of loop-shaped configuration.

## Revendications

1. Fixation d'un câble de frein pour un frein d'arrêt, notamment pour un frein à main à tambour duo-servo, comprenant un mécanisme d'écartement des mâchoires de frein (5) composé d'une jumelle d'appui (1) en forme de fourchette et d'un levier de commande (2) pourvu d'une fourchette (9), le levier de commande (2) étant renfermé dans la fourchette (6) de la jumelle d'appui (1), et un câble de frein (12) pouvant être fixé sur la fourchette (9) du levier de commande (2),
caractérisée en ce qu'un élément d'arrêt (7, 7′) est disposé dans un espace (14) prévu entre la fourchette (9) du levier de commande (2) et l'apex de la fourchette (6) de la jumelle d'appui (1) et destiné à permettre le passage d'un embout attache-câble (13) du câble de frein (12), l'élément d'arrêt s'appuyant sur la jumelle d'appui (1) et comportant une branche élastique (8, 8′) qui repose sur la fourchette (9) du levier de commande (2) en traversant obliquement l'espace (14), de manière que l'embout attache-câble (13) puisse être inséré entre le levier de commande (2) et la branche élastique (8, 8′) de l'élément d'arrêt (7, 7′), et puisse être accroché sur le levier de commande (2).

2. Fixation d'un câble de frein selon la revendication 1, caractérisée en ce que l'élément d'arrêt (7, 7′) est disposé de manière à pouvoir être emboîté par conjugaison de formes dans la fourchette (6) de la jumelle d'appui (1).

3. Fixation d'un câble de frein selon la revendication 1 ou 2, caractérisée en ce que l'élément d'arrêt (7, 7′) est réalisé sous forme d'une agrafe ouverte.

4. Fixation d'un câble de frein selon l'une des revendications 1 à 3, caractérisée en ce que l'embout attache-câble (13) du câble de frein (12) est de préférence réalisé sous forme d'un cône effilé afin de faciliter l'insertion.

5. Fixation d'un câble de frein selon l'une des revendications 1 à 4, caractérisée en ce que les parois latérales définissant l'espace forment, en conjonction avec l'élément d'arrêt, un entonnoir se resserrant dans le sens de l'introduction de l'embout attache-câble (13), qui guide l'extrémité du câble automatiquement vers la fourchette de fixation.

6. Fixation d'un câble de frein selon l'une des revendications 1 à 5, caractérisée en ce que l'élément d'arrêt (7, 7′) de préférence constitué par un ressort à lame est réalisé sous forme d'une agrafe élastique ouverte, qui comporte deux branches (8, 8′, 10, 10′) s'étendant à partir du sommet (11), destinées à s'appuyer élastiquement sur la jumelle d'appui (1) et le levier de commande (2).

7. Fixation d'un câble de frein selon la revendication 6, caractérisée en ce qu'une première branche (10, 10′) s'appuie sur la paroi intérieure de la fourchette (6) de la jumelle d'appui (1), et est repliée vers l'extérieur au niveau de son extrémité libre ainsi qu'au niveau de son sommet (11).

8. Fixation d'un câble de frein selon la revendication 6 ou 7, caractérisée en ce que la première branche (10, 10′) s'enclenche dans la jumelle d'appui (1).

9. Fixation d'un câble de frein selon l'une des revendications 6 à 8, caractérisée en ce qu'un évidement (15) est prévu dans la partie terminale (19) de la jumelle d'appui (1) destinée à l'appui d'une mâchoire de frein (5), l'évidement s'étendant essentiellement perpendiculairement au câble de frein (12) et s'étendant de l'intérieur de la fourchette (6) de la jumelle d'appui (1) vers l'extérieur, et en ce que l'extrémité libre (16) de la première branche (10) de l'élément d'arrêt s'étend à l'intérieur de l'évidement (15) et s'y enclenche.

10. Fixation d'un câble de frein selon l'une des revendications 6 à 8, caractérisée en ce qu'un évidement (18) est prévu dans la face extérieure de la partie terminale (19) de la jumelle d'appui (1), qui est destinée à l'appui d'une mâchoire de frein (5), en ce que la première branche (10) de l'élément d'arrêt (7) entoure la partie terminale (19) et s'enclenche dans l'évidement (18) par l'intermédiaire d'une extrémité libre (17) de préférence cintrée en forme de S.

11. Fixation d'un câble de frein selon l'une des revendications 6 à 10, caractérisée en ce que l'extrémité libre d'une deuxième branche (8) de l'élément d'arrêt (7), qui repose sur la fourchette (9) définie par le levier de commande (2), est cintrée en forme de boucle.
